Europäisches Patentamt

(19) European Patent Office

Office européen des brevets

(11) Publication number: **0 150 266**
**A2**

(12) # EUROPEAN PATENT APPLICATION

(21) Application number: **84111200.6**

(22) Date of filing: **27.02.80**

(51) Int. Cl.⁴: **G 01 M 3/20**, B 01 D 46/42

(30) Priority: **05.03.79 US 17289**

(43) Date of publication of application: **07.08.85**
**Bulletin 85/32**

(84) Designated Contracting States: **AT CH DE FR GB LU NL SE**

(60) Publication number of the earlier application in accordance with Art. 76 EPC: **0024421**

(71) Applicant: **FLANDERS FILTERS, INC., Post Office Box 1219, Washington, NC 27889 (US)**

(72) Inventor: **Wilcox, David E., 1321 Dahlia Court, Carpinteria California 93013 (US)**
Inventor: **Allan, Thomas T., 2121 15th Avenue, San Francisco California 94116 (US)**

(74) Representative: **Warren, Keith Stanley et al, BARON & WARREN 18 South End Kensington, London W8 5BU (GB)**

(54) Method and apparatus for the leak testing of filters.

(57) A method and apparatus for the leak testing of filters (30) arranged in series in a housing, comprises supply pipes (40, 41) for introducing DOP particles within the housing and immediately upstream of each filter, and a hinged restriction member (54a, 54b) mounted in the housing upstream of each filter and downstream of the location at which the DOP is introduced for mixing the airstream and DOP and then dispersing the mixture over the full frontal area of the adjacent filter. A sampling device (70b, 70c) is mounted downstream of each filter for monitoring the airstream to detect DOP particles and thereby permit a determination as to whether any particles are leaking through or around the filter. The restriction member (54b) disposed between the filters serves the dual purpose of mixing the airstream and any leaking particles, during testing of the upstream filter, preparatory to monitoring of the airstream by the sampling device (70b), as well as mixing the airstream and the particles introduced by the adjacent upstream supply pipes (40, 41), preparatory to dispersing the mixture over the full frontal area of the downstream filter, during testing of the latter.

ACTORUM AG

- 1 -

METHOD AND APPARATUS FOR THE LEAK
TESTING OF FILTERS

The present invention relates to the leak testing of filters mounted in spaced apart serial arrangement within a housing.

In the manufacture of high efficiency air filtration systems, the filters, housing and related components are usually initially tested as the final manufacturing step at the factory to locate any leaks and insure compliance with the desired efficiency rating. In addition, it is recognized that in-place testing of the completed installation is essential to insure leak tightness of the housing and filters in their assembled form. Also, in-place tests are usually conducted after each change of a filter in the system to insure proper installation of the new filter, as well as at regular intervals after installation to detect any deterioration of the gaskets or clamping devices, or the development of weld cracks or the like in the housing which result in leaks. Such periodic in-place testing is particularly important where harmful materials, such as potentially radioactive substances, dangerous viable organisms, or carcinogenic or toxic materials, are removed from the airstream by the filtration system.

Both factory and in-place efficiency testing of filters and filter installations conventionally utilizes either a monodispersed or a polydispersed aerosol of dioctyl phthalate (DOP) droplets or particles which have
a light-scattering mean diameter of 0.3 or 0.7 microns,
respectively. The DOP is introduced into the airstream
at a point in the duct far enough upstream of the filter
or filter bank to assure complete dispersion by the time
it reaches the filter or bank of filters. An upstream
sampling device is usually provided immediately upstream
of the filter to determine the concentration of the DOP
in the duct, and a downstream sampling device is provided
to detect leakage. A portion of the airstream is withdrawn from the duct through the sampling devices and
conveyed to an external photometric light-scattering
instrument or the like which is designed to determine
the DOP concentration in both the upstream and downstream
samples.

In order to insure that the air-DOP mixture
charged to the filters is thoroughly mixed to obtain
a substantially uniform dispersion, and that the upstream
sample is representative of the DOP concentration at
that point, it has been recommended that the DOP be
introduced at least ten duct diameters upstream of the
filters, or introduced upstream of baffles or turning
vanes in the duct. Also, the use of a Stairmand disk
positioned three to five duct diameters upstream of the
filters has been recommended for this purpose, see for
example Chapter 7 of "Design, Construction, and Testing
of High Efficiency Air Filtration Systems for Nuclear
Applications" By Burchsted and Fuller, published January
1970 by Oak Ridge National Laboratory. Thus in order
to properly introduce the DOP into the airstream utilizing
these recommended procedures, extra equipment and a great
deal of space is required.

It is also presently recommended that the downstream sampling port be located a considerable distance
downstream of the filter, and preferably downstream of
the exhaust fan, to insure that any DOP which leaks through
the filter becomes sufficiently mixed with the filtered
air so that the leak will be detected no matter where in the airstream the sample is withdrawn. This procedure not only serves to further increase the space requirements of the test apparatus, but also, it reduces the assurance that a leak will be detected by reason of the dilution effect of the leaking DOP in the great volume of filtered air. As will be apparent, this dilution effect is particularly pronounced where a large bank of filters is employed.

In installations requiring multiple banks of filters employed in series, the space requirements for introducing the DOP, and withdrawing the samples, are multiplied since the banks must be separated a distance sufficient to accomplish the above objectives. In an attempt to alleviate this problem, it has been proposed to employ temporary ducts between the various banks with suitable valves therein, and with the temporary ducts serving to selectively isolate each bank in the apparatus during the test procedure and introduce the DOP and withdraw the samples at an appropriate distance from each bank. However, this proposed system is not entirely satisfactory since it requires a great deal of extra equipment which is only used during the test procedure, and the use of temporary ducts adds additional problems of possible leakage through the various required connections and valves.

Where the above tests indicate the presence of an unacceptable leak, it is standard practice for a workman to physically enter the duct at the downstream side of the filter bank to conduct leak probing of individual filters, and thereby permit identification and replacement of the faulty filter. In some cases, it is also necessary for the workman to enter the upstream side to locate the source of the leakage problem. Such direct personnel access is often impractical and/or dangerous however, either because of the system configuration, or because of high radioactivity levels or the presence of other dangerous materials in the airstream. In such cases, it has been previously proposed

-4-

that the housing incorporate remotely operated long-handled probes which are able to cover the entire downstream area of the filter bank, or alternatively, that the workman don protective clothing prior to entering the duct. As will be apparent, neither of these alternatives is satisfactory, since the design and fabrication of suitable remotely operated probes significantly adds to the cost of the housing, and the physical entry of a workman into the duct greatly increases the risk of contamination to himself as well as other workers.

Still another problem associated with the above described conventional testing procedure for a bank of filters is the fact that a great deal of DOP must be fed into the airstream to assure an adequate dispersion in front of each filter. Since the area of the bank may be quite extensive, it is often difficult to achieve an even distribution of the DOP over the face of the entire bank, even when the DOP is introduced ten duct diameters upstream as recommended, and in addition, it is difficult to generate a sufficient quantity of the DOP for such large banks. Also, the DOP tends to become deposited on all of the filters while each individual filter in the system is being probed, thereby unduly loading the filters and increasing their resistance to the passage of the air.

Applicants' prior U. S. Patent No. 4,055,075 discloses a method and apparatus for the leak testing of filters wherein the above noted disadvantages of the earlier techniques and equipment are effectively overcome. More particularly, the applicants' prior patent discloses a test housing wherein the DOP is introduced and dispersed into the duct at a location closely adjacent the upstream face of the filter, thereby to minimize floor space, by means of an electrostatic dispersion device and wherein each filter is charged with DOP and tested individually to permit the ready identification of a leaking filter without manually entering the duct and probing the filters. Further, in one embodiment of the patented housing, there is provision for selectively condensing and imparting turbulence to the airstream immediately downstream of the filter so that the sample may be withdrawn at a location immediately downstream of the filter, thereby further to reduce the space requirements. This is achieved by the provision of restriction means which is disposed downstream of the filter and upstream of the sampling or detecting means and which is pivotally mounted within the housing containing the filter for movement between a non-operative position disposed in general alignment with the direction of the airstream flowing through the filter and an operative position disposed transversely to the airstream. In its operative position, the restriction means partially restricts and imparts turbulence to the airstream flowing through the filter and thoroughly mixes the air and any leaking DOP so that the sampling means will be assured of detecting a representative portion of the DOP.

It is an object of the present invention to provide a method and apparatus for the leak testing of filters in series, and wherein there is provided a single structure which is able to selectively function to mix and condense the air passing through an upstream filter to thereby permit a representative sample to be readily withdrawn and analyzed during testing of the upstream filter, or to mix and disperse the particles in the airstream during the testing of a downstream filter.

Hence, from one aspect, the invention consists in a method for testing for leakage of particles of predetermined size through or around first and second filters spaced apart in series, comprising the steps of passing an airstream successively through the filters, introducing particles of predetermined size into the airstream selectively at locations upstream of the first filter and between the filters, dispersing the particles introduced at the selected location over substantially the full frontal area of the adjacent filter, and monitoring the airstream selectively at locations between the filters and downstream of the second filter to detect particles in the airstream and determine whether either of the filters is leaking, characterised by the step of imparting turbulence to the airstream at a location between the filters so as to mix the airstream and any leaking particles during testing of the first filter and mix the airstream and the particles introduced between the filters during testing of the second filter.

From another aspect, the invention consists in apparatus for filtering an airstream and having provision for testing for leakage of particles of predetermined size through or around first and second filters spaced apart in series, comprising a housing defining an air passageway and having the filters sealably mounted therein, first and second particle introducing means located upstream of the first filter and between the filters, respectively, for selectively introducing particles of predetermined size into the airstream within the housing, means for dispersing the particles introduced by the particle introducing means over substantially the full frontal areas of the adjacent filters, and first and second detecting means located between the filters and downstream of the second filter for detecting particles in the airstream, thereby to permit a determination as to whether either of the filters is leaking, characterised by means for imparting turbulence to the airstream at a location between the filters and, respectively, downstream and upstream of the second particle introducing means and the first detection means, whereby said turbulence imparting means achieves both the functions of mixing the airstream and any leaking particles during testing of the first filter, and mixing of the airstream and the particles introduced by the particle introducing means located between the filters during testing of the second filter.

In order that the invention may be more clearly understood, reference will now be made to the accompanying drawings, in which:-

-8-

Figure 1 is a perspective view of a filter test housing which embodies the features of the present invention;

Figure 2 is a perspective view, partly broken away, of the upper half of the filter housing shown in Figure 1;

Figure 3 is a sectional elevation view taken substantially along the line 3-3 of Figure 2, but with the final funnel-shaped member being shown in its non-operative position;

Figure 4 is a fragmentary perpective view illustrating the apparatus for restricting and distributing an airstream in accordance with the present invention;

Figure 5 is a front elevation view, on a reduced scale, of the upstream side of the apparatus shown in Figure 2;

Figure 6 is a fragmentary elevation view, illustrating the DOP sampling device and taken substantially along the line 6-6 of Figure 3;

Figure 7 is a sectional plan view of the upstream portion of the apparatus shown in Figure 3, but illustrating only one of the air channels; and

Figure 8 is a perspective view of the funnel-shaped member of the present invention, and illustrated in its non-operative position in the housing.

Referring more specifically to the drawings, one embodiment of the present invention is illustrated which includes a housing 12 which is adapted to form a part of an air duct system, such as an exhaust air cleaning system in a nuclear fuel manufacturing facility. More particularly, the housing 12 comprises a generally box-like enclosed structure having two side walls 14 and 15, a top wall 16, and a bottom wall 17. Also, the housing defines a forward open end which is joined to an air inlet opening of the inlet duct 21 via the transition member 22, and a rear open end which is similarly joined to the outlet duct 24 via the transition member 25. The housing is typically fabricated from a sheet metal material, such as 14 gauge stainless steel.

-9-

In the illustrated embodiment, the housing 12 mounts two banks of filters in series, with each bank comprising four filters 30 in parallel. Typically, each filter 30 is about (24 x 24 x 12 inches) in size, and 60x60x30 cms comprises a wooden or chipboard frame 31 surrounding and supporting a pleated filtering media 32, such as a non-woven fiberglass or cellulose-asbestos sheet material. Filters of this type may have extremely high dust retention characteristics, usually greater than about 95% efficiency, and typically 99.97% efficiency, as measured by the conventional DOP test, and are known as "absolute" or HEPA filters in the art.

The filters 30 of each bank are adapted to be inserted and removed from the housing 12 through the two associated side access doors 34, 35 with the two upper filters in each bank being inserted and removed through the upper door 34, and the two lower filters being inserted and removed through the lower door 35. As is well known in the art, clamping means as shown somewhat schematically in Figure 7 at 29, and sealing means are provided in the housing 12 for sealably mounting each of the filters therein. This sealing means may include a resilient gasket on the front peripheral face of the filter frame 31, or a fluid type seal such as shown schematically at 33 and as described in the U. S. Patent No. Re. 27,701 to Allan. Where a dangerous substance, such as radioactive material or viable organisms may be present on the filters or in the airstream, the housing may further include a conventional "bag-out" ring (not shown) about each of the access doors 34, 35 to permit the filters 30 to be enclosed in a plastic bag while being removed from the housing and thereby avoid possible contamination.

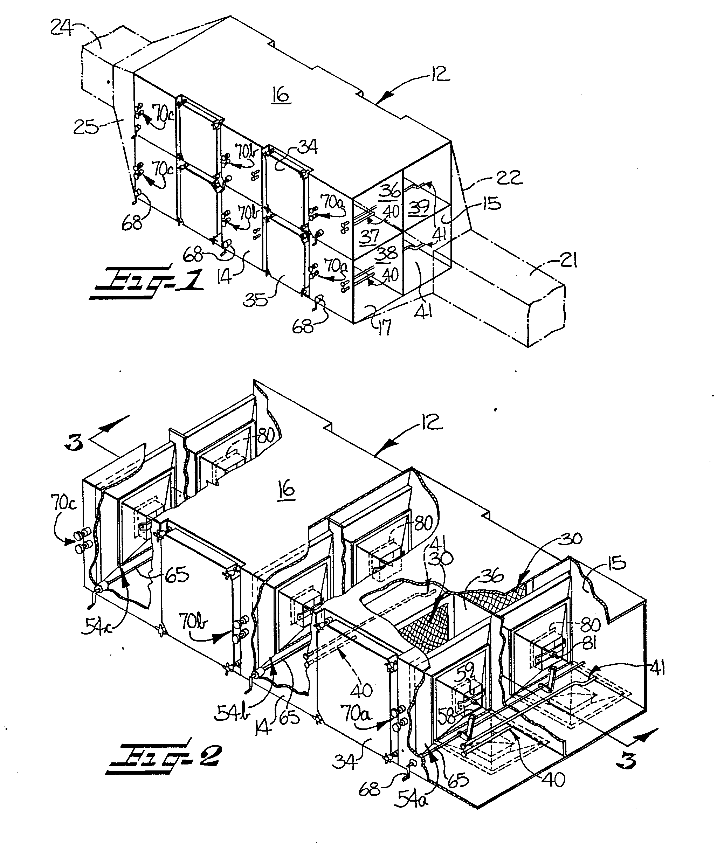

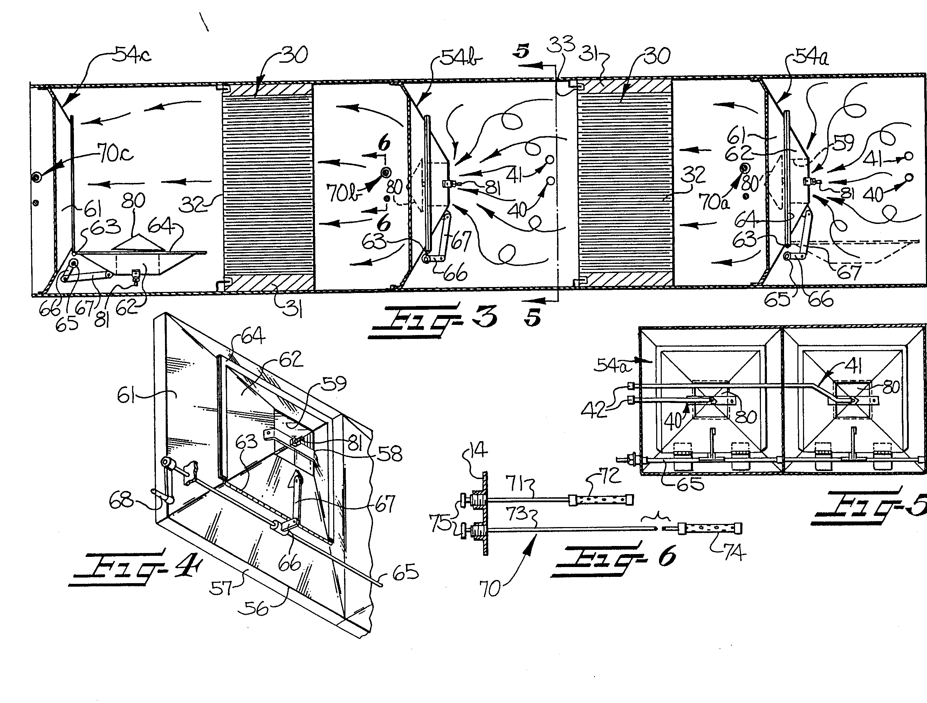

The portion of the housing 12 immediately upstream of each bank of filters is divided into four separate and rectangular air channels by means of the four perpendicularly disposed panels 36, 37, 38 and 39. Each channel is aligned with one of the filters, and generally conforms in cross-sectional outline and size to that of the associated filters. Thus for example, the panels 36 and 37 cooperate with the side wall 14 and top wall 16 to define a separate air channel upstream of the filter located in the upper left hand corner of the bank as seen in Figure 1. By this arrangement, the airstream entering the housing from the transition member 22 is divided by the panels into four equal portions with each portion being isolated from the other portions and directed to pass through a single filter. Where the housing mounts a number of banks of filters in series, the panels 36-39 may extend the entire distance between the banks as best seen in Figure 2 so as to similarly define air channels for the downstream filters. In this regard, it will be understood that the panels 36 and 38 are discontinuous at points immediately adjacent the filters to accommodate the sliding receipt of the inner filter, as well as the clamping mechanism 29, note Figure 7.

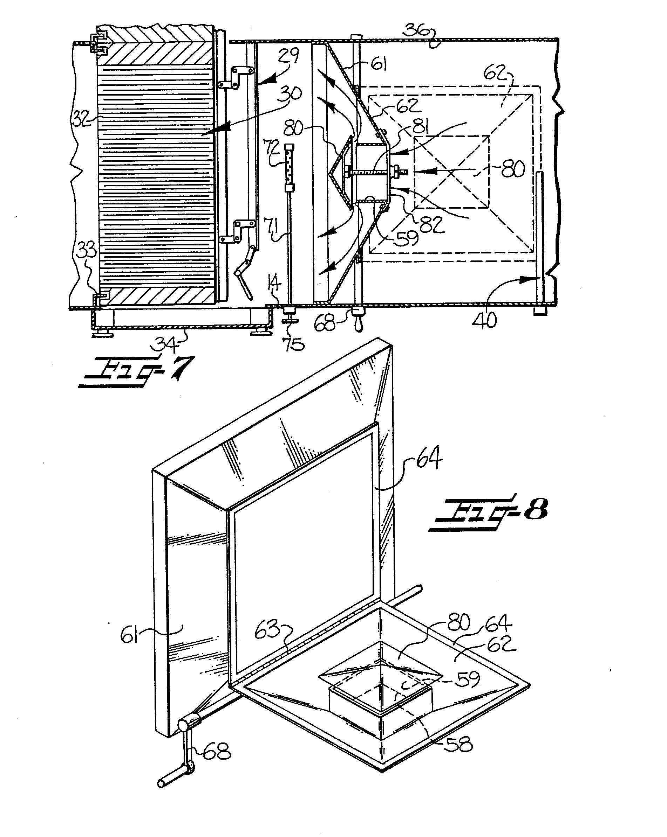

In accordance with the present invention, means are provided for selectively introducing particles of predetermined size (typically DOP particles having a mean diameter of between about 0.3 to 0.7 microns) in the portion of the airstream passing through each one of the channels. As illustrated, this particle introducing means comprises two pairs of supply pipes 40 and 41 which extend horizontally through the housing upstream of the first bank of filters. One pair of supply pipes is operatively associated with the two upper filters in each bank, and another pair is operatively associated with the two lower filters. As best seen in Figure 5, the pipe 40 terminates at a point centrally disposed in the adjacent air channel, and the pipe 41 extends to a central location in the far air channel. Both pipes include an exteriorly positioned cap 42, to permit the pipes to be selectively coupled to a DOP supply source.

The apparatus of the present invention also includes means mounted within each of the separate channels for selectively mixing the airstream and DOP particles, and then substantially uniformly dispersing the same over the full frontal area of the adjacent filter. In the illustrated embodiment, this mixing and dispersing means comprises restriction means in the form of a funnel-shaped member 54 mounted upstream of the filter and downstream of the associated DOP supply pipe. The funnel-shaped member 54 comprises a truncated, four sided pyramid which includes a base 56 which has a rectangular peripheral outline corresponding in size and configuration to the cross-sectional outline of the interior of the channel, and which defines a plane disposed transversely across the channel. A flange 57 is affixed to the base 56 to facilitate the mounting of the member in a rectangular duct. The member 54 also has an apex having a rectangular opening 58 therethrough, and a tube 59 having a rectangular cross-sectional outline corresponding to that of the opening 58. The tube is affixed to the periphery of the opening 58 and extends a substantial distance into the interior of the member and in a direction parallel to the direction of air flow, i.e., toward and perpendicular to the plane defined by the base 56. Preferably, the tube extends at least about one-half the distance to the plane of the base 56.

A transverse deflector 80 overlies in spaced relation the free end of the tube 59, and as best seen in Figure 7, the deflector acts to laterally deflect the airstream moving through the tube, and thereby achieve a substantially uniform dispersion to the downstream filter. In the illustrated embodiment, the deflector 80 comprises a four sided pyramid which is disposed with its base overlying the downstream end of the tube 59. The deflector is attached to the tube by any suitable means, and as illustrated, the attachment means comprises a longitudinally directed threaded member 81 fixed to the inside of the deflector, and a cooperating transverse

-12-

strap 82 mounted across the opening of the apex of the member 54. By this arrangement, longitudinal adjustment of the deflector with respect to the tube is permitted so that the spacing therebetween can be readily adjusted to best achieve the desired uniform dispersion.

The funnel-shaped member 54 also is composed of two separate components, namely, the lower base portion 61 which is adjacent the base 56, and a separate apex portion 62 adjacent the apex and including the tube 59 and deflector 80. The base portion 61 of the member 54 is fixedly mounted in the channel of the housing by welding or the like, and it may be described as being truncated to define a relatively large rectangular opening (not numbered) disposed centrally in the housing. The apex portion 62 is hingedly mounted to the base portion by a hinge 63 which extends transversely across the housing and adjacent the opening of the base portion. In addition, the two portions 61, 62 include mating flanges 64 to facilitate the interface thereof.

To more particularly describe the size and configuration of an exemplary embodiment of the member 54, the base 56 and opening 58 are each square in cross-section, with the base being about (24 inches) [60 cms] along each side and the opening 58 being about (6 inches) [15 cms] along each side. The flange 57 is about (1 inch) [2.5 cms] wide, the longitudinal distance from the base 56 to the apex is about (5-1/4 inches) [13½] and the tube 59 has a longitudinal length of about (3 inches) [7.5 cms].

The apex portion 62 may be pivoted between an operative position wherein the member is in the form of a truncated pyramid which is disposed transversely across the air passageway, and a non-operative position (note the position of the member 54c in Figure 3) wherein the apex portion 62 is disposed along the side of the air passageway so as to be substantially withdrawn from interference with the airstream. The means for operatively controlling the positioning of the apex portion 62 of the member 54 comprises a control rod 65 which extends through the wall 14 of the housing and in a direction parallel to the hinged interconnection 63. A linkage 66, 67 interconnects the rod 65 and apex portion 62 (note Figure 4), and a crank 68 is positioned on the outside of the housing for rotating the rod to pivot the apex portion 62 between its operative and non-operative positions. In this regard, it will be noted that the rod 65 extends through the two laterally adjacent channels, such that the two members 54 are concurrently operated by rotation of the rod.

Viewing Figure 3, it will be seen that the housing includes a first funnel-shaped member 54a positioned upstream of the first filter, a second like funnel-shaped member 54b mounted immediately downstream of the first filter and upstream of the second filter, and a third like funnel-shaped member 54c which is mounted immediately downstream of the second filter.

The housing 12 also includes means for withdrawing a sample of the airstream at each of three separate locations along its length. A first sampling or detecting means 70a is provided immediately downstream of the first funnel-shaped member 54a, a second sampling means 70b immediately downstream of the second member 54b, and a third sampling means 70c immediately downstream of the third member 54c. Each of these three sampling means comprises a first pipe 71 extending laterally into the first adjacent channel and having an apertured sampler 72 positioned immediately downstream of and in alignment with the tube 59 of the adjacent funnel-shaped member, and a second pipe 73 extending into the laterally remote channel and including a similarly positioned sampler 74, note Figure 6. Each pipe extends through the wall 14 of the housing, and includes a removable end cap 75 for permitting the sampler to be selectively connected to a conventional DOP detecting apparatus.

-14-

During normal operation of the filter housing 12, the apex portions 62 of all of the funnel-shaped members 54 are lowered into their non-operative position, so as to minimize air resistance. When leakage tests are to be conducted on the upstream bank, the apex portions 62 of the four members 54a which are upstream of the initial bank of filters, as well as the four members 54b immediately downstream of this bank, are all raised into their operative positions. The third members 54c preferably remain open, such that the various members are oriented in the manner shown in Figure 3.

The above disposition of the members results in the air flow being partially restricted as it moves through each of the four channels, and this restriction produces a back pressure upstream of the housing, which in turn serves to substantially balance the flow among the four channels. Thus an uneven flow pattern resulting from the design of the transition 22, plenum connections, or other upstream duct components, is avoided.

The DOP particles are then selectively and independently introduced into each of the four channels by means of their associated pipes 40 and 41. In each instance, the airstream and entrained particles approach the first member 54a, and substantial turbulence is imparted thereto to mix the particles and air as illustrated schematically in the right hand portion of Figure 3, and the airstream is condensed into the tube 59 of the member. As the airstream exits the tube 59 and deflector 80, it is dispersed over the full cross-sectional area of the channel. At relatively low flow rates, such as where testing is conducted for example at 20% of the designed flow rate of the housing, substantially uniform dispersion over the full frontal area of the filter is achieved. The first sampling means 70a may at this point in the test be connected to the DOP detecting apparatus to determine the upstream concentration of the DOP.

-15-

The airstream continues through the first filter and strikes the downstream second member 54b, which again imparts turbulence to the airstream and condenses it to pass through the tube 59 of the member. Thus the air and any leaking DOP is thoroughly mixed by the time it passes through the tube 59, and such that the sampler 72 (or 74), which is positioned immediately downstream of the tube 59 will be assured of picking up a representative portion of any leaking DOP when it is connected to the detecting apparatus. By this testing procedure, each filter in the first bank may be individually tested, so that the identification of a leaking filter is readily apparent.

To test the filters of the second bank, the four members 54a are preferably moved to their non-operative lowered position, and the two downstream sets of members 54b and 54c are each moved to their operative positions. DOP is then selectively introduced from the associated pipes 40, 41 into each of the four channels, and samples are withdrawn through the samplers of the third sampling means 70c to detect any leaking DOP in the manner described above. In this instance, it will be noted that the members 54b now serve the dual functions of balancing the flow to the second bank of filters, and mixing the air and DOP particles and dispersing the mixture to the second filters. Thus a single component in the housing, namely, the members 54b, perform distinctly different functions during the testing of the two filter banks.

0150266

- 16 -

CLAIMS

1.  A method for testing for leakage of particles of predetermined size through or around first and second filters (30) spaced apart in series, comprising the steps of passing an airstream successively through the filters (30), introducing particles of predetermined size into the airstream selectively at locations upstream of the first filter and between the filters, dispersing the particles introduced at the selected location over substantially the full frontal area of the adjacent filter, and monitoring the airstream selectively at locations between the filters and downstream of the second filter to detect particles in the airstream and determine whether either of the filters is leaking, characterised by the step of imparting turbulence to the airstream at a location between the filters (30) so as to mix the airstream and any leaking particles during testing of the first filter and mix the airstream and the particles introduced between the filters during testing of the second filter.

2.  A method according to claim 1, characterised by the step of imparting turbulence to the airstream at a location upstream of the first filter and downstream of the location at which particles are introduced upstream of the first filter so as to mix the airstream and particles during testing of the first filter.

3.  A method according to claim 1 or 2, characterised by the step of monitoring the airstream at a location upstream of the first filter to detect the concentration of particles introduced into the airstream upstream of the first filter during testing of the latter.

4. A method according to claim 1,2 or 3, characterised by imparting turbulence to the airstream at a location downstream of the second filter and upstream of the location at which leaking particles are monitored downstream of the second filter so as to mix the airstream and leaking particles during testing of the second filter.

5. Apparatus for filtering an airstream and having provision for testing for leakage of particles of predetermined size through or around first and second filters spaced apart in series, comprising a housing (12) defining an air passageway and having the filters (30) sealably mounted therein, first and second particle introducing means (40,41) located upstream of the first filter and between the filters, respectively, for selectively introducing particles of predetermined size into the airstream within the housing, means (80) for dispersing the particles introduced by the particle introducing means over substantially the full frontal areas of the adjacent filters, and first and second detecting means (70b,70c) located between the filters and downstream of the second filter for detecting particles in the airstream, thereby to permit a determination as to whether either of the filters is leaking, characterised by means (54b) for imparting turbulence to the airstream at a location between the filters and, respectively, downstream and upstream of the second particle introducing means (40,41) and the first detection means (70b), whereby said turbulence imparting means (54b) achieves both the functions of mixing the airstream and any leaking particles during testing of the first filter, and mixing of the airstream and the particles introduced by the particle introducing means (40,41) located between the filters during testing of the second filter.

6.   Apparatus according to claim 5, characterised by means (54a) for imparting turbulence to the airstream at a location upstream of the first filter (30) and downstream of the first particle introducing means (40,41) so as to mix the airstream particles introduced by the first particle introducing means.

7.   Apparatus according to claim 5 or 6, characterised by third particle detecting means (70a) located upstream of the first filter (30) and downstream of the first particle introducing means (40,41) for monitoring the concentration of the particles introduced by the first particle introducing means.

8.   Apparatus according to claim 5,6 or 7, characterised by means (54c) for imparting turbulence to the airstream at a location downstream of the second filter (30) and upstream of the second particle detecting means (70c) so as to mix the airstream and leaking particles during testing of the second filter.

9.   Apparatus according to claim 5,6,7 or 8, characterised in that the or each turbulence imparting means (54a,54b, 54c) comprises a restriction member for partially restricting the airstream and thereby imparting turbulence thereto, so as to mix the airstream and particles, and for dispersing the airstream over substantially the full cross-section of the air passageway downstream thereof.

10.  Apparatus according to claim 5,6,7,8 or 9, characterised in that the particle detecting means comprise ducts (70a,70b,70c) via which samples are withdrawn from the airstream for analysis.

0150266

Fig-1

Fig-2

Fig-3

Fig-4

Fig-5

Fig-6

0150266

Fig-7

Fig-8